# EUROPEAN PATENT APPLICATION

(11) **EP 4 336 211 A1**
(43) Date of publication of application: **13.03.2024**
(21) Application number: 22194288.1
(22) Date of filing: 07.09.2022
(51) Int. Cl.: G01S 7/48, G01S 17/00, G01S 17/42, G01S 17/50, G06F 3/01, G06F 3/03

(54) **CONTROLLING DEVICES USING LIDAR SIGNALS**

(71) Applicant: Nokia Technologies Oy, 02610 Espoo (FI)
(72) Inventor: WRIGHT, Christopher, London, E15 4AD (GB); CRONIN, Harry, Cambridge, CB1 3DE (GB); MCDONALD, Rory, Cambridge, CB22 4PN (GB); DUFFY, David, 8003 Zurich (CH)
(74) Representative: Nokia EPO representatives

(57) **Abstract**

Examples of the disclosure relate to apparatus and systems that enable a user device to be controlled by detecting LiDAR signals transmitted from a wearable user device. The user device can be configured to detect at least part of a pattern of a transmitted LiDAR signal wherein the LiDAR signal is transmitted from a wearable user device. One or more movement parameters of the detected at least part of the pattern of a transmitted LiDAR signal can be determined. The one or more movement parameters correspond to movement of a user of the wearable user device relative to the another user device. At least one function of the user device can be controlled based on the detected movement parameters.

## Description

### TECHNOLOGICAL FIELD

Examples of the disclosure relate to controlling devices using LiDAR (Light Detection and Ranging) signals. Some relate to controlling devices using LiDAR signals transmitted from a wearable user device.

### BACKGROUND

Wearable user devices such as mediated reality headsets can comprise LiDAR modules. These could be configured for the purpose of detecting objects near to the wearable user device or for any other suitable purpose.

### BRIEF SUMMARY

According to various, but not necessarily all, examples of the disclosure there may be provided an apparatus comprising means for:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.

The transmitted LiDAR signal may comprise an infra-red signal.

The transmitted LiDAR signal may comprise a plurality of dots.

The means may be for detecting a plurality of sensing events wherein different sensing events correspond to different dots in the transmitted LiDAR signal and the movement parameters can be detected based on one or more parameters of the respective sensing events.

The means may be for using a machine learning model to identify the one or more movement parameters.

The means may be for enabling one or more functions of the another user device if the detected movement parameters indicate that the user of the wearable user device is facing towards the another user device.

The means may be for suspending one or more functions of the another user device if the detected movement parameters indicate that the user of the wearable user device is not facing towards the another user device.

The means may be for identifying a gesture user input based on the detected movement parameters and controlling one or more functions of the another user device based on the identified gesture user input.

The means may be for detecting one or more parameters of the transmitted LiDAR signal and using the detected one or more parameters to authenticate the wearable user device.

The transmitted LiDAR signals may be detected by one or more infra-red sensors in at least one of: a camera module, a finger print sensor.

The means may be for obtaining information indicative of a position of the wearable user device.

The wearable user device may comprise a head set.

The wearable user device may comprise a mediated reality device.

According to various, but not necessarily all, examples of the disclosure there may be provided a method comprising:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.

According to various, but not necessarily all, examples of the disclosure there may be provided a computer program comprising computer program instructions that, when executed by processing circuitry, cause:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example system;
FIG. 2 shows an example method;
FIG. 3 shows another example system;
FIG. 4 shows an example system in use;
FIG. 5 shows another example;
FIG. 6 shows another example; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DETAILED DESCRIPTION

Examples of the disclosure relate to apparatus and systems that enable a user device to be controlled by detecting LiDAR signals transmitted from a wearable user device. For instance, if LiDAR signals from the wearable user device are detected by the user device this can indicate that the user of the wearable user device is facing towards the device that has detected the LiDAR signals. The functions of the user device can therefore be controlled appropriately. Similarly, if LiDAR signals from the wearable user device are not detected by the user device this can indicate that the user of the wearable user device is not facing towards the device and the functions of the user device can therefore be controlled to take that into account.

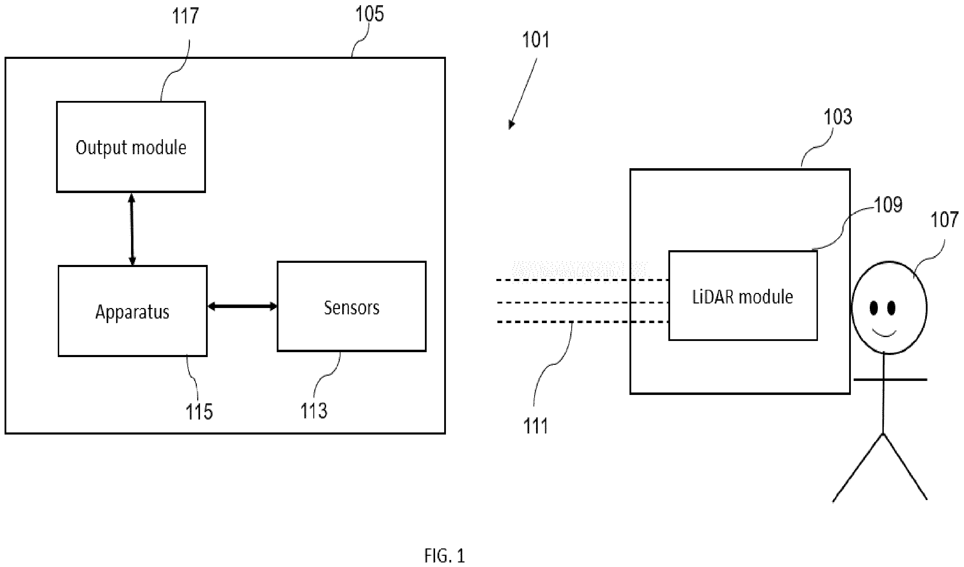

Fig. 1 schematically shows an example system 101 that could be used to implement examples of the disclosure. The system 101 comprises a wearable user device 103 and another user device 105. Only components that are relevant to the following description are shown in Fig.1. The system 101 could comprise other components in other examples.

The wearable user device 103 can comprise any suitable device that can be worn by a user 107. The wearable user device 103 and the user 107 are not shown to scale in Fig. 1. The wearable user device 103 comprises at least a LiDAR module 109. The wearable user device 103 can comprise other components that are not shown in Fig. 1. For instance, the wearable user device 103 could comprise one or more output modules for providing mediated reality outputs to the user 107 and/or any other suitable components.

The wearable user device 103 can be configured to be attached to a part of the user's body so that movement of the user 107 causes movement of the wearable user device 103. The wearable user device 103 can be configured to be attached to a part of the user's body so that the direction in which LiDAR signals are projected from the wearable user device 103 is indicative of a position of the user 107. For example, the direction in which LiDAR signals are projected from the wearable user device 103 can be indicative of a direction in which the user 107 is facing.

In some examples the wearable user device 103 can comprise a mediated reality device. The wearable user device 103 can be configured to provide mediated reality outputs to the user 107. The mediated reality outputs can comprise augmented reality outputs, virtual reality outputs or any other suitable type of outputs.

In some examples the wearable user device 103 can comprise a headset. The head set can be configured to be worn on the user's head. The wearable user device 103 can comprise means for attaching the wearable user device 103 to the user's head. Other types of wearable user device 103 could be used in other examples. For instance, the wearable user device 103 could comprise a watch, or an item of smart clothing or any other suitable type of wearable user device 103.

The LiDAR module 109 can comprise any means configured to provide LiDAR functionality for the wearable user device 103. The LiDAR module 109 can be configured to detect objects near to the wearable user device 103 and/or for any other suitable purpose.

The LiDAR module 109 can be configured to transmit a LiDAR signal 111. The LiDAR signal can be an infra-red signal. The LiDAR signal 111 can comprise a pattern such as a dot pattern. The dot pattern can comprise a plurality of dots arranged in any suitable arrangement. The dots in the pattern can have a regular size, shape and/or arrangement.

The another user device 105 can be a user device that is different to the wearable user device 103. For instance, the another user device 105 could be a mobile phone, a television, a personal computer or any other suitable type of device.

In some examples the another user device 105 could belong to, or be otherwise associated with, the user 107 of the wearable user device 103. For instance the another user device 105 could be a mobile phone or other similar device belonging to the user 107 of the wearable user device 103. In some examples the another user device 105 could be a device that can be used by multiple different users, for example it could be a television that could be shared by multiple users.

In the example of Fig.1 the another user device 105 comprises one or more sensors 113, an apparatus 115 and one or more output modules 117. The another user device 105 can comprise other components that are not shown in Fig. 1. For instance, the another user device 105 could comprise one or more transceiver modules for enabling wireless communications and/or any other suitable components.

The sensors 113 can comprise any means that can be configured to detect the LiDAR signals 111, or at least part of the LiDAR signals 111, from the wearable user device 103. The sensors 113 can comprise one or more infra-red sensors.

The sensor 113 can be configured to perform other functions in addition to sensing the LiDAR signals 111. For instance, in some examples the sensors 113 could comprise an imaging sensor in a camera that could be configured to capture images. In some examples the sensor 113 could be part of an authentication device such as a finger print sensor. Other types of sensor 113 could be used in some examples.

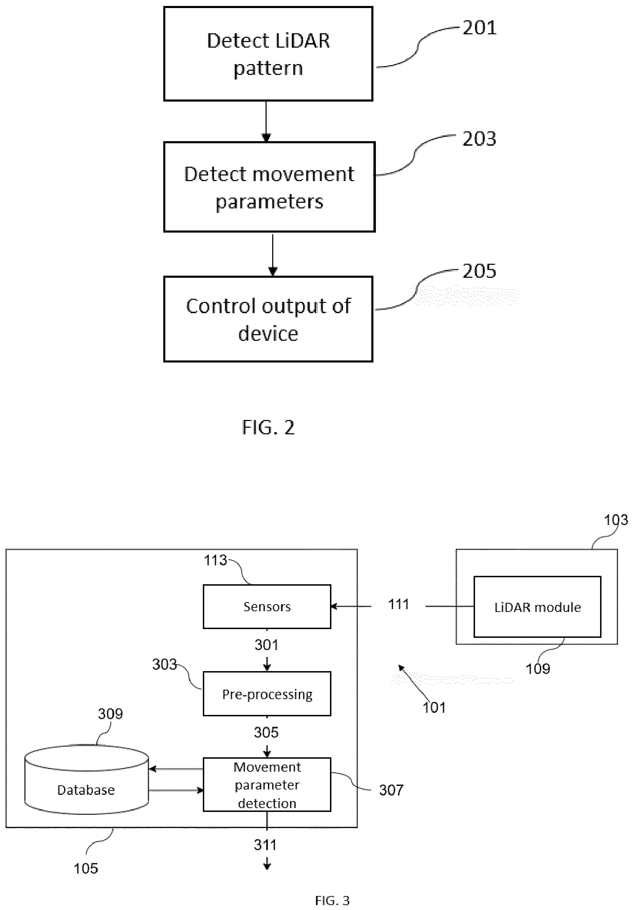

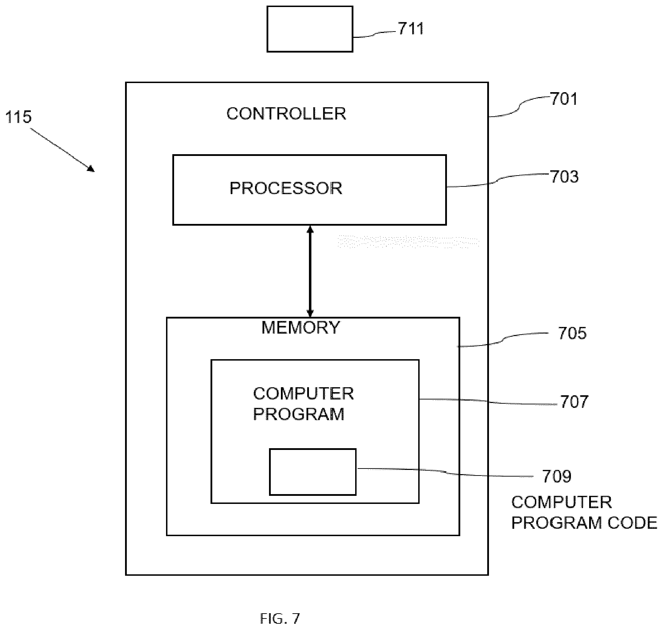

The apparatus 115 could be configured to control the another user device 105. Examples of an apparatus 115 are shown in more detail in Fig. 7. The apparatus 115 can be configured to receive inputs from the sensor 113 and to provide outputs to the output module 117. The apparatus 115 could be configured to implement methods such as the method of Fig. 2.

The output module 117 can comprise any means for providing an output. For instance, the output module could comprise a display, a loudspeaker or any other suitable means.

The output module 117 can be configured to be controlled by the apparatus 115. The apparatus 115 can be configured to control functions performed by the output module 117 and/or any other components of the another user device 105. The apparatus 115 can be configured to control whether or not an output is provided by output module, the type of output that is provide by the module, and or any other aspects of the output module.

Variations to the system 101 shown in Fig.1 could be made in other examples of the disclosure. For instance, in this example the apparatus 115 is shown as part of the another user device 105. In other examples the apparatus 115 could be in one or more other devices and the another user device 105 could be configured to communicate with the apparatus 115 to enable control of the output module 117.

Fig. 2 shows an example method. The method could be implemented by the apparatus 115 of Fig. 1 or by any other suitable means or arrangements.

The method comprises, at block 201, detecting at least part of a pattern of a transmitted LiDAR signal 111. The LiDAR signal 111 is transmitted from a wearable user device 103. The wearable user device 103 could be as shown in Fig. 1 or could be any other suitable type of wearable user device 103.

The sensors 113 that detect the at least part of the pattern of the transmitted LiDAR signal 111 are located in another user device 105. That is, the sensors 113 that detect the LiDAR signal 111 are not part of the device that transmit the LiDAR signal 111.

The transmitted LiDAR signal 111 can comprise an infra-red signal. The infra-red signal can comprise any suitable range of infra-red wavelengths.

The transmitted LiDAR signal 111 comprises a pattern. The pattern of the transmitted LiDAR signal 111 can comprise a structured light pattern. The pattern of the transmitted LiDAR signal 111 can comprise a plurality of dots. The dots can be configured in any suitable arrangement. In some examples the dots can be regularly sized and positioned at regular intervals. Other arrangements of the dots, or types of patterns could be used.

When the sensors 113 detect the LiDAR signal 111 the sensors 113 can detect the pattern or part of the pattern. Different parts of the pattern can generate different sensing events of the sensors 113. The different sensing events can be caused by the sensors 113 detecting different parts of the pattern of the transmitted LiDAR signal 111. For instance, if the pattern of the LiDAR signal 111 comprises a plurality of dots then the different sensing evets can comprise the sensors 113 detecting different dots within the pattern.

The different sensing events can occur in different locations. For instance, different parts of the pattern of the transmitted LiDAR signal 111could be sensed by different pixel areas of the sensors 113.

The different sensing events can occur at different times. For example, different parts of the pattern of the transmitted LiDAR signal 111 can be detected at different points in time as the wearable user device 103 and the another user device 105 are moved relative to each other.

At block 203 the method comprises detecting one or more movement parameters of the detected parts of the pattern of a transmitted LiDAR signal 111. The one or more movement parameters correspond to movement of a user 107 of the wearable user device 103 relative to the another user device 105. The pattern in the transmitted LiDAR signal can be fixed so that this does not change over time. Therefore the detected movement parameters can indicate movement of the wearable user device 103 relative to the another user device 105. For instance, changes in the locations of a sensing event can indicate that the wearable user device 103 has moved relative to the and other user device 105. Similarly, if a sensing event does not change over a time period this can indicate that there is no, or very little movement, of the wearable user device 103 relative to the another user device 105.

The movement parameters can comprise any information or values that indicate how the pattern of the transmitted LiDAR signals 111 has moved relative to the another user device 105. The movement parameters could comprise information indicative of the number of sensing events, trajectories of sensing events, frequency of sensing events, locations of sensing events, and/or any other suitable information.

In some examples the movement parameters can indicate that there is movement of the wearable user device 103 relative to the another user device 105. In such cases there would be a change in the sensing events as the pattern of the LiDAR signals 111 moves over the sensors 113. In some examples the movement parameters can indicate that there is no movement, or that there is very little movement, of the wearable user device 103 relative to the another user device 105. In such cases there would be no change, or very little change, sensing events because there would no, or very little, movement of the pattern of the LiDAR signals 111 relative to the sensors.

Anny suitable means can be used to determine the movement parameters from the detected LiDAR signals 111. In some examples a machine learning model could be used to identify the one or more movement parameters from the sensing events.

At block 205 the method comprises controlling at least one function of the another user device 105 based on the detected movement parameters. For example, one or more functions of the output module 117 of the another user device 105 could be controlled based on the detected movement of the pattern of the LiDAR signals 111. The function that is controlled and the way in which the function is controlled can be dependent upon the movement parameters that have been detected.

Any suitable means can be used to determine the function that is to be controlled, and how the function should be controlled, based on the detected movement parameters. In some examples a look-up table or database can be used to identify the function that is to be controlled and how it is to be controlled.

As an illustrative example, the movement parameters could indicate that a user 107 of the wearable user device 103 is facing the another user device 105. For instance, if the wearable user device 103 is a headset, or other item of smart clothing, with a LiDAR projector at the front, then the transmitted LiDAR signal 111 will be incident on objects in front of the user 107. Therefore, if the sensors 113 of the another user device 105 detect the transmitted LiDAR signal 111 this indicates that the user 107 is facing towards the another user device 105. In this case the functions of the another user device 105 can be controlled to take into account the fact that the user 107 could be looking at the another user device 105. Suitable functions to perform in these circumstances could be to switch the another user device 105 from an idle or standby mode of operation into an active mode of operation. In the active mode of operation one or more functions of the output module 117 are available that were not an available in the idle or inactive mode.

As another illustrative example, the movement parameters can indicate that a user 107 of the wearable user device 103 is not facing the another user device 105. For instance, if the sensors 113 of the another user device 105 do not detect the transmitted LiDAR signal 111 this indicates that the user 107 is not facing towards the another user device 105. In this case the functions of the another user device 105 can be controlled to take into account the fact that the user 107 is not looking at the another user device 105. Suitable functions to perform in these circumstances could be to switch the another user device 105 from an active mode into an idle or stand by mode. In the idle mode one or more functions of the another user device 105 could be suspended. For examples if the output module 117 is being used to provide media content the media content could be paused while the user 107 is not looking towards the another user device 105.

Whether or not a user is looking towards the another user device 105 or away from the another user device 105 can provide a passive input to the another user device 105. The inputs can be passive in that they might be the consequence of a user 107 making a movement that does not have the primary purpose of controlling the another user device 105. For instance, a user might look away from the another user device 105 because they are distracted by something else in the environment. Examples of the disclosure could enable the functions of therefore enable the functions to be paused or suspended automatically without a deliberate input from the user 107.

In some examples the detection of the LiDAR signals 111 can provide a deliberate input from the user 107. For instance, the user could deliberately look towards the another user device 105 to wake the another user device 105 up and to move it out of an idle mode. As an illustrative example a user 107 could deliberately direct the LiDAR signals 111 towards the another user device 105 to enable notifications of the another user device 105 to be displayed.

In some examples the user 107 could make a deliberate gesture input that could be detected by the another user device 105. For instance, the user 107 could make a predetermined sequence of movements that can be identified from the movement parameters of the pattern of the LiDAR signal 111. The sequence of the gestures could comprise the user 107 moving their head from side to side and/or moving their head up and down, and/or any other movements or combinations of inputs. When a specific gesture is detected a function of the another user device 105 can be controlled based on the detected gesture.

In some examples one or more parameters of the transmitted LiDAR signal 111 can be detected and used to authenticate the wearable user device 103. The one or more parameters could be indicative of the type of wearable user device 103 and can provide an indication that the user 107 of the wearable user device 103 is authorised to activate or access functions of the another user device 105. In some examples the parameters of the transmitted LiDAR signal 111 could be parameters determined by physical characteristics of the wearable user device 105. For instance, the parameters could comprise wavelength of the LiDAR signals 111, geometric features of the pattern of the LiDAR signals 111 such as dot size, dot spacing, dot arrangements or any other suitable feature. The type of wearable device 103 that is being used could be known by the another user device 105. This information could be provided via ad hoc wireless communication such as Bluetooth or by any other suitable means.

In some examples information about the position of the wearable user device 103 can also be obtained. This information could be obtained using any suitable means such as Bluetooth sharing, active scanning, imaging of the scene around the another user device 105 or any other suitable means. The information about the position of the wearable user device 103 can be used to control the functions of the another user device 105. For instance, the system 101 can be configured so that the functions of the another user device 105 are only controlled if the wearable user device 103 is within a given range of the another user device 105. This could enable the LIDAR signals 111 from the wearable user device 103 to be used to control the another user device 105 if the respective devices 103, 105 are close to each other but not if they are far apart.

The threshold distance for determining whether the respective devices 103, 105 are close to each other can be dependent upon the type of functions that are to be controlled and/or any other suitable factors. For instance, a range of less that 1 meter could be used for many cases. A range of more than one meter could be used for specific cases such as controlling capturing of images.

In some examples information about the position of the another user device 105 relative to the wearable device 103 could be obtained. This information could be used to adjust the LiDAR signals 111 so that they are incident on the one or more sensors 113 of the another device.

In some cases the LiDAR signals 111 could be transmitted continuously by the wearable user device 103. In such cases, if the wearable user device 103 is in use then the LiDAR signals 111 could be transmitted. In other cases the LiDAR signals 111 could be transmitted at intervals or in response to specific triggers. The triggers that are used to start the transmission of the LiDAR signals 111 could comprise movement of the user 107 or any other suitable trigger or combination of triggers.

Fig. 3 shows another example system 101 that could be used in some examples of the disclosure.

The example system 101 comprises a wearable user device 103 and another user device 105. These could be similar to those shown in Fig. 1. Corresponding reference numerals are used for corresponding features.

The wearable user device 103 could be a head mounted device or any other suitable type of wearable user device 103.

The wearable user device 103 comprises a LiDAR module 109. The LiDAR module 109 is configured to transmit a LiDAR signal 111. The LiDAR signal 111 comprises a pattern. In this example the pattern can comprise an array of dots. Other patterns could be used in some examples.

The LiDAR module 109 is positioned within the wearable user device 103 so that the LiDAR signals 111 are transmitted in a direction that the user 107 is facing. For instance, if the wearable user device 103 is a head mounted device the LiDAR module 109 can be configured so that the LiDAR signals 111 are transmitted out of the front of the wearable user device 103.

The LiDAR module 109 is positioned within the wearable user device 103 so that when the user 107 moves the LiDAR module 109 also moves. This enables movement of the pattern in the LiDAR signals 111 to be used to identify movement of the user 107.

The another user device 105 can be a mobile phone or any other suitable type of device. In some examples the another user device 105 could belong to, or be otherwise associated with the user 107 of the wearable user device 103.

The another user device 105 comprises sensors 113. The sensors 113 are configured to detect the LiDAR signals 111 from the wearable user device 103. In this example the sensors 113 could be part of camera or any suitable components within the another user device 105. This can enable the sensors 113 to be used to perform multiple functions.

The sensors 113 provide infra-red data 301 as an output. The infra-red data is an electrical signal comprising information that is indicative of the sensing events that have been detected by the sensors 113.

The infra-red data 301 can be provided to a pre-processing module 303. The pre-processing module 303 can be part of an apparatus 115 or could be provided by any other suitable means.

The pre-processing module 303 can be configured to process the infra-red data 301 to identify one or more properties of the detected LiDAR signals 111. In some examples the pre-processing module 303 can be configured to process the infra-red data 301 to identify properties of sensing events that have been detected by the sensors 113. Example properties that are determined could be, number of sensing events, duration of sensing events, frequency of sensing events, direction vectors for the sensing events, and/or any other suitable properties.

The pre-processing module 303 is configured to provide processed infra-red data 305 as an output. The processed infra-red data 305 can be provided to a movement parameter detection module 307. The movement parameter detection module 307 can be part of an apparatus 115 or could be provided by any other suitable means.

The movement parameter module 307 can be configured to detect and/or identify movement parameters from the processed infra-red data 305. The movement parameters can comprise any information or values that indicate movement of the pattern from the LiDAR signals 111. For instance, it can comprise information relating to movement of one or more dots within a dot pattern.

In some examples the movement parameters can comprise ranges of values. Illustrative examples of movement parameters that could be used in various circumstances could be:
a dot vector of 160-200 degrees, indicating that a dot of the LiDAR pattern initially impinges on the top of the sensor 113 and then moves downwards;
a frequency of events which decreases to zero over time, this would indicate that the user 107 has stopped moving;
a total number of sensing events which is smaller than the number of dots in pattern of the LiDAR signals 111, this indicates that only part of the pattern has passed over the sensors 113 and the user 107 is now facing towards the another device 105;
an amplitude and event duration which indicates the distance of the wearable user device 103 from the sensors 113, the amplitude of the detected signal might increase for points near to the centre of the pattern, as the user 107 turns to face the another device 105 because there might be a shorter distance between the sensors 113 and the wearable user device 103 due to the user's head movement.

Once the movement parameters have been identified a database 309 can be accessed. The database 309 can be part of an apparatus 115, for instance it could be stored in a memory of an apparatus 115, or could be provided by any other suitable means.

The database 309 can store information associating the movement parameters with functions of the another user device 105. In some examples the database 309 can comprise a look up table that indicates a function, and/or action relating to the function, that corresponds to a detected set of movement parameters. This can provide an association between movement of the user 107 and functions of the another user device 105.

Once the function to be performed has been determined a control output 311 is provided. The control output 311 enables one or more functions of the another user device 105 to be controlled. The functions controlled by the control output 311, and the way in which the functions are controlled is determined by the functions associated with the detected movement parameters.

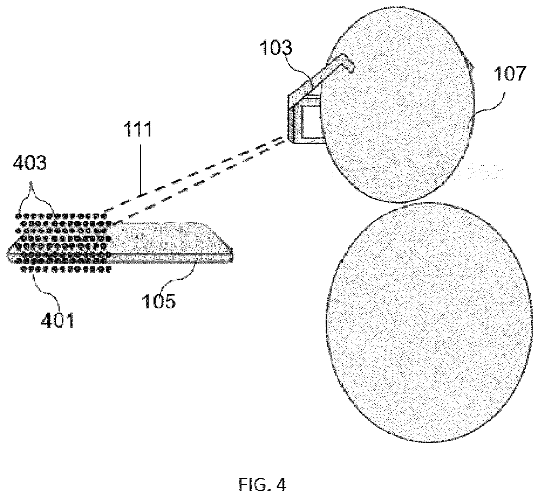

Fig. 4 shows an example system 101 in use.

In this example a user 107 is wearing a wearable user device 103. The wearable user device 103 in this case is a pair of smart glasses. The smart glasses can be used for providing mediated reality content or for any other suitable purpose.

The wearable user device 103 is configured to transmit LiDAR signals 111. In the example of Fig. 4 the LiDAR signals 111 are transmitted out of the front of the wearable user device 103 so that the LiDAR signals 111 are transmitted in a direction that the user 107 is facing.

The LiDAR signals 111 comprise a pattern 401. In this example the pattern 401 comprises an array of dots 403. The array of dots 403 comprise a plurality of rows of dots 403. The dots 403 are regularly sized so that different dots 403 within the array are the same size. The dots 403 are regularly spaced so that there are equal distances between respective pairs of neighboring dots. Other arrangements for the dots, and/or different types of patterns could be used in some examples.

The user 107 is positioned close to another user device 105. In this example the another user device 105 is a mobile phone. The another user device 105 could be a mobile phone belonging to the user 107 or the user 107 could be otherwise authorized to use the another user device 105.

In the example of Fig. 4 the another user device 105 is lying on a surface such as a table or desk. The another user device 105 is not currently being used by the user 107 and could be in an idle or inactive state. For example, a display of the another user device 105 could be in a standby mode so that nothing is currently displayed on the display.

The user 107 has an unobstructed view of the another user device 105 so that when the user 107 is facing in the direction of the another user device 105 the LiDAR signals 111 transmitted by the wearable user device 103 are incident another user device 105. This enables the LiDAR signals 111 to be detected by the sensors 113 of the another user device 105.

In the example of Fig. 4 the user 107 makes a movement of their head. In this case the movement could be to turn towards the another user device 105 so that they are facing the another user device 105. When the user turns to face the another user device 105 the LiDAR signals 111 are detected by the sensors 113 of the another user device 105.

In response to detecting the LiDAR signals 111, the sensors 113 output infra-red data 301 indicative of the pattern of the LiDAR signals 111 that have been detected. The infra-red data is processed to determine properties of the sensing events that have detected by the sensors.

In some examples the number of sensing events can be determined. This could be indicative of the number of dots 403 of the pattern 401 that are incident on the sensors 113. An amplitude threshold, or any other suitable means, can be used to detect when an infra-red signal is present and therefore when a sensing event has occurred.

A duration of the sensing events can also be detected using an amplitude threshold or any other suitable means. The duration of the sensing events can provide an indication of if the user 107 is continuing to face towards the another user device 105, or if they are just moving their head.

A frequency of the sensing events can be determined from a time gap between sequential sensing events. The frequency can be determined for respective pairs of the dots 403.

A spatial direction vector for one or more the sensing events can be determined. In some examples the spatial direction vector can be determined by using the time at which the threshold signal amplitude for each sensing event is detected at each pixel of the sensors 113. An x axis and y axis component of the direction of movement can be determined by averaging the time values within the first and last pixel rows (for the y axis speed) and columns (for the x axis speed) and dividing the corresponding axial dimension of the sensor by the time difference. These two values can define the spatial direction vector.

Once the movement parameters have been determined a database 309 can be queried to determine the function that best matches the detected movement parameters. In this case the movement parameters indicate that a user 107 has turned to face the another user device 105 and the associated function is to wake the another user device 105 out of the idle mode.

Therefore, in response to detecting the LiDAR signals 111 the another user device 105 can be controlled to wake up and exit the idle mode.

In some examples the function that is performed in response to movement parameters indicate that a user 107 has turned to face the another user device 105 could be to display a notification on a display of the another user device 105. The notification could provide instructions to the user such as, "nod to wake device". This could require the user 107 to perform a simple movement gesture that can be detected from the movement of the LiDAR signals 111. This gesture input can provide confirmation that the user 107 wants to wave the another user device 105 up.

Other types of movements of the user 107 could be used in other examples. For instance, in the previously described example the user 107 turned to face towards the another user device 105 and this enabled the another user device 105 to detect the LiDAR signals 111. In other examples the movement of the user 107 could be to turn away from the another user device 105. In such examples the user 107 could initially be facing towards the another user device 105. In such cases information could be displayed on a display of the another user device 105 so that the user 107 can view it. The information could be notifications or images or any other suitable information. When the user 107 turns to face away from the another user device 105 the LiDAR signal 111 is also moved so that it is no longer detected by the sensors 113. The movement parameters in this case therefore indicate that the user 107 is not facing towards the another user device 105 any more. In this case the another user device 105 can be controlled to suspend the functions that were being performed when the user 107 was looking at the device. For instance, the information that was being displayed on the display can be stopped. This can conserve power of the another user device 105 and also provide privacy for the information being displayed. Other functions could be controlled in other examples.

In some examples the movements of the user 107 could be specific gesture inputs. The gesture inputs could be provided in response to instructions displayed on the display of the another user device 105 (or provided by any other suitable means). The instructions could require a user to confirm a selection or perform any other suitable function. For example a gesture input could be used to accept an incoming communication, to stop or start rending content or to perform any other suitable functions.

In other cases the gesture inputs could be used without any initial notification or prompt from the another user device 105. For instance, if a user 107 is looking at video content on the another user device 105 a gesture user input could be used to stop and/or start the content or to perform any other suitable function.

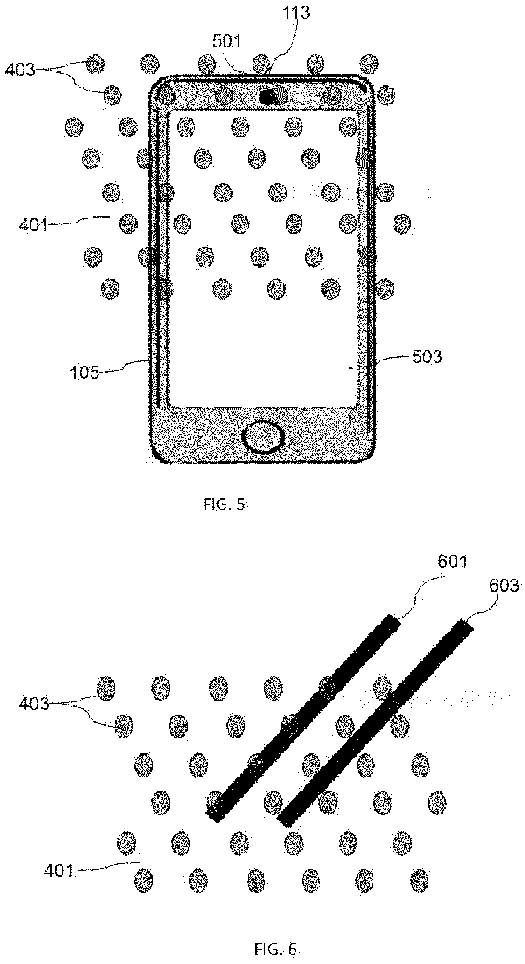

Fig. 5 shows an example of a pattern 401 of a LiDAR signal 111 that is incident on another user input device 105.

In this case the another user device 105 is a mobile phone. The mobile phone comprises a front facing camera 501. The front facing camera 501 is provided on the same face of the another user device 105 as the display 503.

The front facing camera 501 can comprise an image sensor that is sensitive to infra-red light so that the front facing camera 501 provide sensors 113 for detecting LiDAR signals 111.

Fig. 5 shows an example pattern 401 of the LiDAR signals 111 on the another user device 105. In this example the pattern 401 comprises an array of dots 403. The array of dots 403 comprise a plurality of rows of dots 403. The dots 403 are regularly sized so that different dots 403 within the array are the same size. The dots 403 are regularly spaced so that there are equal distances between respective pairs of neighboring dots. Other arrangements for the dots, and/or different types of patterns could be used in some examples.

The pattern 401 is incident on the front surface of the another user device 105 so that at least part of a dot 403 is incident on the aperture of the front facing camera 501. This enables the front facing camera to detect the dot 403 or part of the dot 403.

If the wearable user device 103 is moved this will also move the pattern 401 of the LiDAR signal 111 and change which parts of the dot or dots 403 are incident on the aperture of the front facing camera 501. This change can be detected as movement parameters and used to control the another user device 105.

Fig. 6 shows another example transition paths for the aperture of the front facing camera 501 that could occur as the wearable user device 103 is moved relative to the another user device 105.

The first trajectory 601 shows that multiple different dots 403 would be incident on the aperture of the front facing camera 501 at different times. The trajectory 601 could be determined by processing the detected infra-red signals.

The first trajectory 603 shows a case in which none of the dots 403 would be incident on the aperture of the front facing camera 501 at different times. The possibility of having such a trajectory 603 can be reduced by having more sensors 113. For instance, if the display of the another user device 105 could be used instead of, or in addition to, the front facing camera 501 to detect the LiDAR signals this would provide a larger sensing area.

Also, when the user 107 there is likely to be some non-linearity in the movements. That is, the user's head might wobble a bit as they move. This nonlinearity means that it is not very likely that none of the dots 403 would be incident on the sensors 113 as the user moves.

In the above described examples the another user device 105 is a mobile phone or other similar type of device. Other types of another user devices 105 could be used in other examples. In some cases the another user device 105 could be another wearable user device. The another wearable user device could be worn by another user. In this case if the another wearable user device detects LiDAR signals 111 it can provide an indication that the two users are facing each other. This could indicate that the users are having a conversation for example. In such cases it might be desirable to avoid interruptions during the conversation and so the another user device 105 could be set to do not disturb so that notifications can be cancelled during the conversation. When it is detected that the two users are no longer facing each other the do not disturb setting could be turned off and the notifications could be re-enabled.

Fig. 7 schematically illustrates an apparatus 115 that can be used to implement examples of the disclosure. In this example the apparatus 115 comprises a controller 701. The controller 701 can be a chip or a chip-set. In some examples the controller 701 can be provided within a communications device or any other suitable type of device.

In the example of Fig. 7 the implementation of the controller 701 can be as controller circuitry. In some examples the controller 701 can be implemented in hardware alone, have certain aspects in software including firmware alone or can be a combination of hardware and software (including firmware).

As illustrated in Fig. 7 the controller 701 can be implemented using instructions that enable hardware functionality, for example, by using executable instructions of a computer program 707 in a general-purpose or special-purpose processor 703 that may be stored on a computer readable storage medium (disk, memory etc.) to be executed by such a processor 703.

The processor 703 is configured to read from and write to the memory 705. The processor 703 can also comprise an output interface via which data and/or commands are output by the processor 703 and an input interface via which data and/or commands are input to the processor 703.

The memory 705 stores a computer program 707 comprising computer program instructions (computer program code) that controls the operation of the controller 701 when loaded into the processor 703. The computer program instructions, of the computer program 707, provide the logic and routines that enables the controller 701. to perform the methods illustrated in the accompanying Figs. The processor 703 by reading the memory 705 is able to load and execute the computer program 707.

The apparatus 115 comprises:
at least one processor 703; and
at least one memory 705 including computer program code 709;
the at least one memory 705 and the computer program code 709 configured to, with the at least one processor 703, cause the apparatus 115 at least to perform:
   detecting 201 at least part of a pattern of a transmitted LiDAR signal wherein the LiDAR signal is transmitted from a wearable user device and wherein the sensors that detect the at least part of the pattern of the transmitted LiDAR signal are located in another user device;
   detecting 203 one or more movement parameters of the detected at least part of the pattern of a transmitted LiDAR signal, wherein the one or more movement parameters correspond to movement of a user of the wearable user device relative to the another user device; and
   controlling 203 at least one function of the another user device based on the identified movement parameters.

The apparatus 115 comprises:
at least one processor 703; and
at least one memory 705 including computer program code 709;
the at least one memory 705 storing instructions that, when executed by the at least one processor 703, cause the apparatus 115 at least to:
   detecting 201 at least part of a pattern of a transmitted LiDAR signal wherein the LiDAR signal is transmitted from a wearable user device and wherein the sensors that detect the at least part of the pattern of the transmitted LiDAR signal are located in another user device;
   detecting 203 one or more movement parameters of the detected at least part of the pattern of a transmitted LiDAR signal, wherein the one or more movement parameters correspond to movement of a user of the wearable user device relative to the another user device; and
   controlling 203 at least one function of the another user device based on the identified movement parameters.

As illustrated in Fig. 7, the computer program 707 can arrive at the controller 701 via any suitable delivery mechanism 711. The delivery mechanism 711 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 707. The delivery mechanism can be a signal configured to reliably transfer the computer program 707. The controller 701 can propagate or transmit the computer program 707 as a computer data signal. In some examples the computer program 707 can be transmitted to the controller 701 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 707 comprises computer program instructions for causing an apparatus 115 to perform at least the following or for performing at least the following:
detecting 201 at least part of a pattern of a transmitted LiDAR signal wherein the LiDAR signal is transmitted from a wearable user device and wherein the sensors that detect the at least part of the pattern of the transmitted LiDAR signal are located in another user device;
detecting 203 one or more movement parameters of the detected at least part of the pattern of a transmitted LiDAR signal, wherein the one or more movement parameters correspond to movement of a user of the wearable user device relative to the another user device; and
controlling 203 at least one function of the another user device based on the identified movement parameters.

The computer program instructions can be comprised in a computer program 707, a non-transitory computer readable medium, a computer program product, a machine readable medium. In some but not necessarily all examples, the computer program instructions can be distributed over more than one computer program 707.

Although the memory 705 is illustrated as a single component/circuitry it can be implemented as one or more separate components/circuitry some or all of which can be integrated/removable and/or can provide permanent/semi-permanent/ dynamic/cached storage.

Although the processor 703 is illustrated as a single component/circuitry it can be implemented as one or more separate components/circuitry some or all of which can be integrated/removable. The processor 703 can be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in Fig. 2 can represent steps in a method and/or sections of code in the computer program 707. The illustration of a particular order to the blocks does not necessarily imply that there is a required or preferred order for the blocks and the order and arrangement of the blocks can be varied. Furthermore, it can be possible for some blocks to be omitted.

Examples of the disclosure therefore provide a system 101 that can be used to enable control of another user device 105 with minimal input from a user 107 of a wearable user device 103.

The apparatus 115 can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus 115 can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.

2. An apparatus as claimed in claim 1 wherein the transmitted LiDAR signal comprises an infra-red signal.

3. An apparatus as claimed in any preceding claim wherein the transmitted LiDAR signal comprises a plurality of dots.

4. An apparatus as claimed in claim 3 wherein the means are for detecting a plurality of sensing events wherein different sensing events correspond to different dots in the transmitted LiDAR signal and the movement parameters can be detected based on one or more parameters of the respective sensing events.

5. An apparatus as claimed in any preceding claim wherein the means are for using a machine learning model to identify the one or more movement parameters.

6. An apparatus as claimed in any preceding claim wherein the means are for enabling one or more functions of the another user device if the detected movement parameters indicate that the user of the wearable user device is facing towards the another user device.

7. An apparatus as claimed in any preceding claim wherein the means are for suspending one or more functions of the another user device if the detected movement parameters indicate that the user of the wearable user device is not facing towards the another user device.

8. An apparatus as claimed in any preceding claim wherein the means are for identifying a gesture user input based on the detected movement parameters and controlling one or more functions of the another user device based on the identified gesture user input.

9. An apparatus as claimed in any preceding claim wherein the means are for detecting one or more parameters of the transmitted LiDAR signal and using the detected one or more parameters to authenticate the wearable user device.

10. An apparatus as claimed in any preceding claim wherein the transmitted LiDAR signals are detected by one or more infra-red sensors in at least one of: a camera module, a finger print sensor.

11. An apparatus as claimed in any preceding claim wherein the means are for obtaining information indicative of a position of the wearable user device.

12. An apparatus as claimed in any preceding claim wherein the wearable user device comprises a head set.

13. An apparatus as claimed in any preceding claim wherein the wearable user device comprises a mediated reality device.

14. A method comprising:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.

15. A computer program comprising computer program instructions that, when executed by processing circuitry, cause:
detecting at least part of a pattern of a transmitted LiDAR signal wherein the LiDAR signal is transmitted from a wearable user device and wherein the sensors that detect the at least part of the pattern of the transmitted LiDAR signal are located in another user device;
detecting one or more movement parameters of the detected at least part of the pattern of a transmitted LiDAR signal, wherein the one or more movement parameters correspond to movement of a user of the wearable user device relative to the another user device; and
controlling at least one function of the another user device based on the detected movement parameters.
